# EUROPÄISCHE PATENTSCHRIFT

(11) **EP 2 662 195 B1**
(45) Veröffentlichungstag und Bekanntmachung des Hinweises auf die Patenterteilung: **24.10.2018**
(21) Anmeldenummer: 12167000.4
(22) Anmeldetag: 07.05.2012
(51) Int. Cl.: B29C 47/40, B29C 47/08, B29C 47/60, B29C 47/76

(54) **Mehrwellen-Extruder zur Durchführung eines Extrusionsverfahrens und reaktives Extrusionsverfahren**
Multiple shaft extruder for performing an extrusion method and reactive extrusion method
Installation d'extrusion à ondes multiples pour exécuter un procédé d'extrusion et un procédé d'extrusion réactif

(43) Veröffentlichungstag der Anmeldung: 13.11.2013
(73) Patentinhaber: Coperion GmbH, 70469 Stuttgart (DE)
(72) Erfinder: Lechner, Frank, 76131 Karlsruhe (DE)
(74) Vertreter: Rau, Schneck & Hübner Patentanwälte Rechtsanwälte PartGmbB

(56) Entgegenhaltungen:
- EP-A1- 2 082 862
- EP-A2- 0 343 280
- WO-A2-2009/152936
- GB-A- 1 138 826
- GB-A- 1 348 933
- US-A1- 2002 057 626
- US-A1- 2010 156 051

## Beschreibung

Die Erfindung betrifft einen Mehrwellen-Extruder zur Durchführung eines Extrusionsverfahrens gemäß dem Oberbegriff des Anspruchs 1. Ferner betrifft die Erfindung ein mit einem derartigen Mehrwellen-Extruder durchgeführtes reaktives Extrusionsverfahren.

Bei reaktiven Extrusionsverfahren wird ein Extruder in der Regel mit einem flüssigen und unter Druck stehenden Kunststoffmaterial beschickt. Das aufzubereitende Kunststoffmaterial weist zu Beginn der reaktiven Behandlung häufig eine niedrige Viskosität auf, die während der Behandlung im Extruder ansteigt. Über die Temperaturführung und die Drehzahl des Extruders sowie über die Verweilzeit wird die chemische Reaktion im Extruder beeinflusst. Das aufzubereitende Kunststoffmaterial wird nahe der Getriebelaterne in den Extruder gegeben und von dort aus stromabwärts gefördert. Das Kunststoffmaterial steht bei der Übergabe in den Extruder unter Druck, wobei Drücke bis zu 50 bar üblich sind. Hierdurch ergeben sich im Wesentlichen zwei Probleme. Zum einen ist die Abdichtung des Verfahrensteils des Extruders gegenüber dem Getriebe aufgrund der niedrigen Viskosität des Kunststoffmaterials und dem hohen Druck schwierig. Zum anderen treten aufgrund des hohen Drucks hohe Zugkräfte auf, die mittels der Lager im Getriebe nur schwierig aufgenommen werden können.

Aus der EP 0 343 280 A2 ist eine Zweischneckenmaschine bekannt, der über eine Materialfüllanordnung Material zugeführt wird, das zunächst mittels Schnecken in einer ersten Förderrichtung gefördert wird. An Abdichtungselementen wird das Material über eine Umgehungsleitung in der Mitte der Schneckenmaschine aus dem Gehäuse abgeführt und am Ende der Schneckenmaschine wieder in das Gehäuse zugeführt. Mittels der Schnecken wird das Material vom Ende der Schneckenmaschine in einer entgegengesetzten zweiten Förderrichtung zur Mitte der Schneckenmaschine gefördert und dort über eine Materialaustragsanordnung aus dem Gehäuse ausgetragen.

Aus der WO 2009/152 936 A2 ist ein Mehrschnecken-Extruder bekannt, der sowohl auf einer Einlassseite als auch auf einer Ausstoßseite jeweils eine Synchronisations- und Torsionsübertragungseinrichtung aufweist, die eine Synchronisation beider Extruder-Schnecken ermöglichen. Die Extruder-Schnecken werden durch zwei Antriebsmotoren drehangetrieben, wobei eine Materialzuführung an den in Bezug auf die Antriebsmotoren abtriebsseitigen Wellenenden und eine Materialabführung an den antriebsseitigen Wellen angeordnet ist.

Aus der US 2002/057 626 A1 ist ein Doppelschnecken-Extruder mit einer Dichtung bekannt, bei der zwei Dichtlippen eine Kammer ausbilden, die mit Druckluft gefüllt ist.

Aus der GB 1 138 826 A ist ein Einschnecken-Extruder bekannt, der antriebsseitig eine Fluiddichtung für die Schneckenwelle aufweist.

Aus der US 2010/156 051 A1 ist eine Dichtvorrichtung für einen Mehrwellen-Extruder bekannt.

Aus der GB 1 348 933 ist eine Mehrwellen-Extruder bekannt, bei dem an einer Antriebsseite Kunststoffmaterial in die Gehäusebohrungen zugeführt und an den abtriebsseitigen Wellenenden aus den Gehäusebohrungen wieder abgeführt wird.

Aus der EP 2 082 862 A1 ist ein Extruder bekannt, bei dem die Gleitlager zur getriebeseitigen Lagerung der Wellen gleichzeitig zum Verspannen der Stopfbuchspackungen zum Abdichten der Wellen eingesetzt werden. Hierdurch werden Undichtigkeiten im Bereich der Stopfbuchspackungen weitestgehend reduziert.

Der Erfindung liegt die Aufgabe zugrunde, einen Mehrwellen-Extruder zu schaffen, der eine einfache und zuverlässige Lagerung und Abdichtung der Wellen bei der Durchführung reaktiver Extrusionsverfahren ermöglicht.

Diese Aufgabe wird durch einen Mehrwellen-Extruder mit den Merkmalen des Anspruchs 1 gelöst. Erfindungsgemäß sind die auf den Wellen angeordneten Behandlungselemente derart ausgebildet, dass die Förderrichtung des Kunststoffmaterials von den abtriebsseitigen Wellenenden zu den antriebsseitigen Wellenenden verläuft. Die Förderrichtung des Kunststoffmaterials wird also gegenüber herkömmlichen Mehrwellen-Extrudern umgekehrt, sodass das aufzubereitende Kunststoffmaterial in Richtung der antriebsseitigen Wellenenden bzw. der Antriebseinheit mit dem Getriebe gefördert wird. Die Förderrichtung verläuft also von einer Materialzuführung, die im Bereich der abtriebsseitigen Wellenenden angeordnet ist, zu einer Materialabführung, die im Bereich der antriebsseitigen Wellen angeordnet ist. Dadurch, dass das aufzubereitende Kunststoffmaterial im Bereich der abtriebsseitigen Wellenenden zugeführt und im Bereich der antriebsseitigen Wellen abgeführt wird, treten im Bereich der antriebsseitigen Wellenenden bzw. des antriebsseitigen Gehäuseendes wesentlich geringere Drücke auf, wodurch eine einfachere Abdichtung möglich ist. Die abtriebsseitigen Wellenenden bzw. das abtriebsseitige Gehäuseende kann trotz der hohen Drücke aufgrund der Materialzuführung vergleichsweise einfach und gut abgedichtet werden, da für die Abdichtung an den abtriebsseitigen Wellenenden keine Beeinträchtigungen durch das Getriebe bestehen. Darüber hinaus treten aufgrund der im Vergleich zu herkömmlichen Mehrwellen-Extrudern umgekehrten Förderrichtung Zugkräfte an den abtriebsseitigen Wellenenden auf, die durch das Vorsehen entsprechender Lager am abtriebsseitigen Gehäuseende einfach aufgenommen werden können. An den antriebsseitigen Wellenenden treten im Wesentlichen keine Zugkräfte mehr auf, sodass die Lager der Antriebseinheit bzw. des Getriebes im Vergleich zu herkömmlichen Mehrwellen-Extrudern entlastet sind. An den antriebsseitigen Wellenenden auftretende Druckkräfte können von den Lagern der Antriebseinheit bzw. des Getriebes vergleichsweise gut aufgenommen werden.

Dadurch, dass zwischen dem abtriebsseitigen Gehäuseende und der Materialzuführung auf den Wellen jeweils mindestens ein in der Förderrichtung förderndes Behandlungselement angeordnet ist, wird die Abdichtung der abtriebsseitigen Wellenenden gegenüber dem abtriebsseitigen Gehäuseende vereinfacht. Dadurch, dass zwischen dem abtriebsseitigen Gehäuseende und der Materialzuführung Behandlungselemente angeordnet sind, die das zugeführte Kunststoffmaterial in der Förderrichtung fördern, wird zudem die Abdichtung der abtriebsseitigen Wellenenden entlastet. Der von dem Kunststoffmaterial ausgeübte Druck auf die Abdichtung ist dementsprechend reduziert. Die mindestens eine Entgasungszone gewährleistet eine Entgasung des Kunststoffmaterials während dessen Aufbereitung. Hierdurch wird der Druck in den Gehäusebohrungen bzw. dem Gehäuse reduziert, wodurch die Dichtungen entlastet werden.

Der Mehrwellen-Extruder ermöglicht auf einfache Weise eine Lagerung der abtriebsseitigen Wellenenden in dem abtriebsseitigen Gehäuseende und eine Abdichtung der abtriebsseitigen Wellenenden gegenüber dem abtriebsseitigen Gehäuseende. Die abtriebsseitigen Dichtungen können beispielsweise als Stopfbuchsen bzw. Stopfbuchspackungen oder als Dicht- bzw. Simmerringe ausgebildet sein. Weiterhin können die abtriebsseitigen Lager als Axial- und/oder Radiallager ausgebildet sein. Die abtriebsseitigen Lager bzw. Axiallager sind insbesondere derart ausgebildet, dass in der Förderrichtung wirkende Zugkräfte an den abtriebsseitigen Wellenenden aufnehmbar sind.

Ein Mehrwellen-Extruder nach Anspruch 2 gewährleistet, dass das aufzubereitende Kunststoffmaterial in üblicher Weise, jedoch im Bereich der abtriebsseitigen Wellenenden in die Gehäusebohrungen zuführbar ist.

Ein Mehrwellen-Extruder nach Anspruch 3 ermöglicht auf einfache Weise ein Abführen des aufbereiteten Kunststoffmaterials im Bereich der antriebsseitigen Wellenenden. Das aufbereitete Kunststoffmaterial kann im Gegensatz zu herkömmlichen Mehrwellen-Extrudern nicht stirnseitig am Gehäuseende abgeführt werden, da dort die Antriebseinheit bzw. das Getriebe angeordnet ist. Durch die Ausbildung der Materialabführung an der Unterseite des Gehäuses wird dennoch ein einfaches Abführen des aufbereiteten Kunststoffmaterials ermöglicht.

Ein Mehrwellen-Extruder nach Anspruch 4 vereinfacht die Abdichtung der antriebsseitigen Wellenenden gegenüber dem antriebsseitigen Gehäuseende. Dadurch, dass die zwischen dem antriebsseitigen Gehäuseende und der Materialabführung auf den Wellen angeordneten Behandlungselemente als Stauelemente ausgebildet sind, wird aufbereitetes Kunststoffmaterial, das in Förderrichtung über die Materialabführung in Richtung des antriebsseitigen Gehäuseendes gefördert wird, durch die Stauelemente wieder in Richtung der Materialabführung zurückgefördert. Aufbereitetes Kunststoffmaterial, das im Bereich der Materialabführung eine vergleichsweise hohe Viskosität aufweist, gelangt somit überhaupt nicht bis zu dem antriebsseitigen Gehäuseende, wodurch die Abdichtung der antriebsseitigen Wellenenden gegenüber dem antriebsseitigen Gehäuseende vergleichsweise einfach ist.

Ein Mehrwellen-Extruder nach Anspruch 5 stellt auf einfache Weise eine Lagerung der antriebsseitigen Wellenenden in dem antriebsseitigen Gehäuseende und eine Abdichtung der antriebsseitigen Wellenenden gegenüber dem antriebsseitigen Gehäuseende sicher. Die antriebsseitigen Dichtungen können in üblicher Weise als Stopfbuchsen bzw. Stopfbuchspackungen oder als Dicht- bzw. Simmerringe ausgebildet sein. Die antriebsseitigen Lager können als Axial- und/oder Radiallager ausgebildet sein. Die antriebsseitigen Lager bzw. Axiallager können derart ausgebildet sein, dass in der Förderrichtung wirkende Druckkräfte an den antriebsseitigen Wellenenden aufnehmbar sind. Die antriebsseitigen Wellenenden können beispielsweise mittels Radiallagern in dem antriebsseitigen Gehäuseende gelagert sein, wobei die zugehörige Antriebseinheit bzw. das zugehörige Getriebe weitere Axial- und/oder Radiallager aufweist, insbesondere um die in Förderrichtung wirkenden Druckkräfte aufnehmen zu können.

Ein Mehrwellen-Extruder nach Anspruch 6 gewährleistet eine wirkungsvolle Aufnahme von in der Förderrichtung wirkenden Zugkräften an den abtriebsseitigen Wellenenden. Hierdurch sind die antriebsseitigen Wellenenden im Wesentlichen frei von Zugkräften, sodass die antriebsseitigen Lager bzw. die Lager des Getriebes entlastet sind.

Ein Mehrwellen-Extruder nach Anspruch 7 gewährleistet, dass die Axiallager mittels der abtriebsseitigen Dichtungen vor dem aufzubereitenden Kunststoffmaterial geschützt sind.

Ein Mehrwellen-Extruder nach Anspruch 8 ermöglicht ein Auffangen von aus dem abtriebsseitigen Gehäuseende austretendem Kunststoffmaterial im Falle eines Versagens der abtriebsseitigen Dichtungen. Das Abdeckelement begrenzt mit dem Gehäuse eine Kammer, die zur Verbesserung der Abdichtung der abtriebsseitigen Wellenenden unter Druck gesetzt werden kann. Der Druck in der Kammer kann derart sein, dass eine Druckdifferenz zwischen dem Druck in der Kammer und dem Druck in den Gehäusebohrungen im Bereich der abtriebsseitigen Wellenenden besteht, die kleiner als 30 bar, insbesondere kleiner als 20 bar und insbesondere kleiner als 10 bar ist. Der Druck in der Kammer kann mit einer zugehörigen Pumpe erzeugt werden. Der Druck in der Kammer kann beispielsweise mittels eines zugehörigen Drucksensors geregelt werden. Als Druckmedium kann Luft verwendet werden. Durch die unter Druck stehende Kammer kann die Belastung der abtriebsseitigen Dichtungen reduziert werden.

Ein Mehrwellen-Extruder nach Anspruch 9 ermöglicht ein Erkennen einer defekten abtriebsseitigen Dichtung, indem in der Überwachungskammer befindliches Kunststoffmaterial mittels des Überwachungssensors detektiert wird. Der Überwachungssensor ist beispielsweise als Drucksensor ausgebildet.

Ein Mehrwellen-Extruder nach Anspruch 10 gewährleistet in einfacher Weise die Aufbereitung des Kunststoffmaterials.

Eine Extruder-Anordnung nach Anspruch 11 gewährleistet einen zuverlässigen Betrieb des Mehrwellen-Extruders sowie der zugehörigen Antriebseinheit. Dadurch, dass die Abdichtung der antriebsseitigen Wellenenden gegenüber dem antriebsseitigen Gehäuseende im Vergleich zum Stand der Technik deutlich entlastet ist, muss die Abdichtung nur noch in vergleichsweise großen Zeitabständen gewartet werden. Zudem sinkt das Risiko eines verschleißbedingten Ausfalls der Abdichtung. Weiterhin sind die Getriebelager deutlich entlastet, sodass diese weniger verschleißen. Hierdurch wird eine hohe Zuverlässigkeit der Extruder-Anordnung erzielt.

Der Erfindung liegt ferner die Aufgabe zugrunde, ein reaktives Extrusionsverfahren zu schaffen, das in einfacher und zuverlässiger Weise mittels eines Mehrwellen-Extruders durchführbar ist.

Diese Aufgabe wird durch ein reaktives Extrusionsverfahren mit den Merkmalen des Anspruchs 12 gelöst. Das Kunststoffmaterial wird vorzugsweise unter Druck zugeführt, wobei der Druck mindestens 30 bar, insbesondere mindestens 40 bar und insbesondere mindestens 50 bar beträgt. Die Vorteile des Extrusionsverfahrens entsprechen den bereits beschriebenen Vorteilen des Mehrwellen-Extruders. Insbesondere kann das Extrusionsverfahren auch durch die Merkmale der Ansprüche 2 bis 11 weitergebildet werden.

Weitere Merkmale, Vorteile und Einzelheiten der Erfindung ergeben sich aus der nachfolgenden Beschreibung eines Ausführungsbeispiels. Es zeigen:

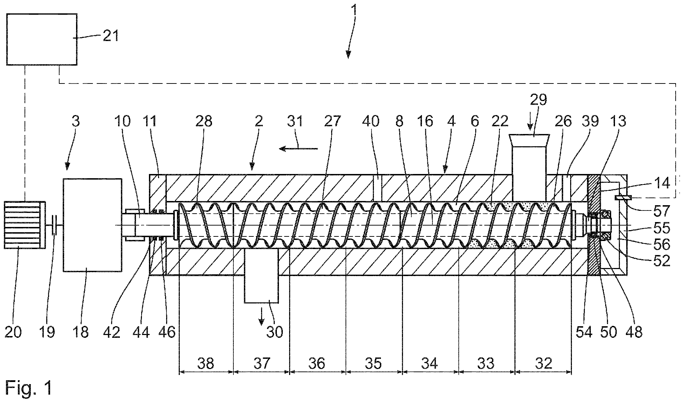

- Fig. 1: eine teilweise geschnittene Seitenansicht einer Extruder-Anordnung mit einem Mehrwellen-Extruder zur Durchführung eines reaktiven Extrusionsverfahrens,

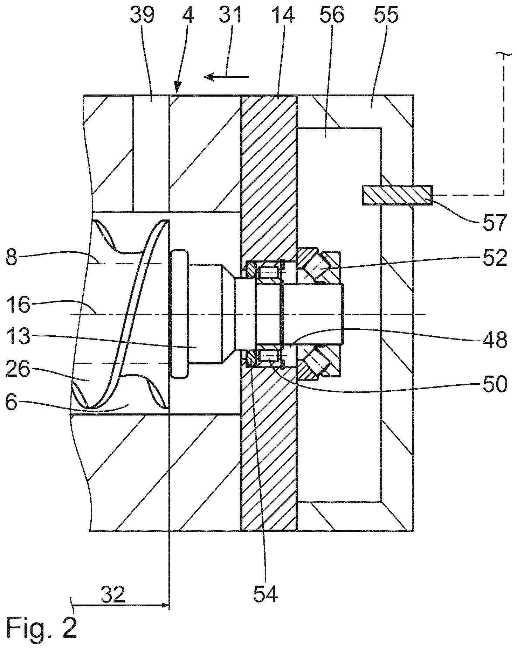

- Fig. 2: eine vergrößerte Ansicht des Mehrwellen-Extruders im Bereich der abtriebsseitigen Wellenenden,

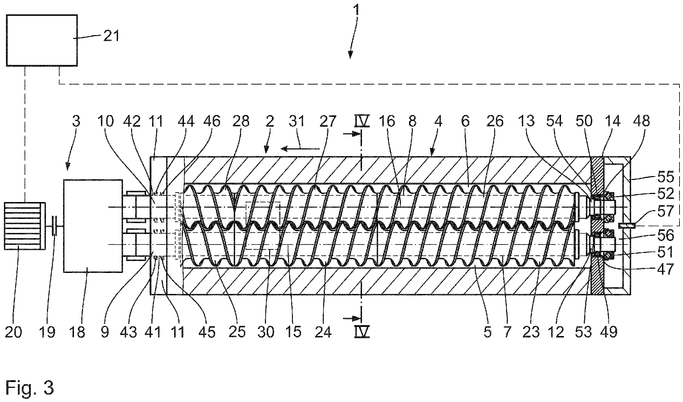

- Fig. 3: eine teilweise geschnittene Draufsicht auf die Extruder-Anordnung in Figur 1, und

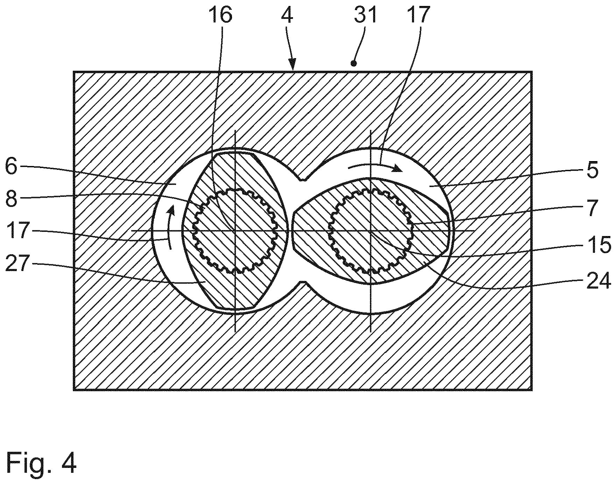

- Fig. 4: einen Querschnitt durch die Extruder-Anordnung in Figur 1 im Bereich des Mehrwellen-Extruders.

Eine Extruder-Anordnung 1 weist einen Mehrwellen-Extruder 2 auf, der mit einer Antriebseinheit 3 gekoppelt und mittels dieser antreibbar ist. Der Mehrwellen-Extruder 2 ist als gleichsinnig drehender und dicht kämmender Doppelwellen-Extruder ausgebildet.

Der Extruder 2 weist ein Gehäuse 4 auf, in dem zwei Gehäusebohrungen 5, 6 ausgebildet sind, die parallel zueinander verlaufen und in Form einer liegenden acht ineinander greifen. In diesen Gehäusebohrungen 5, 6 sind zwei Wellen 7, 8 konzentrisch angeordnet und mit ihrem jeweiligen antriebsseitigen, also der Antriebseinheit 3 zugewandten Wellenenden 9, 10 in einem antriebsseitigen Gehäuseende 11 sowie mit ihren jeweiligen abtriebsseitigen, also der Antriebseinheit 3 abgewandten Wellenenden 12, 13 in einem abtriebsseitigen Gehäuseende 14 gelagert. Die Wellen 7, 8 sind um parallel zueinander verlaufende Drehachsen 15, 16 gleichsinnig, also in gleicher Drehrichtung 17 mittels der Antriebseinheit 3 drehantreibbar. Hierzu sind die antriebsseitigen Wellenenden 9, 10 mit einem Verzweigungsgetriebe 18 gekoppelt, das wiederum über eine Kupplung 19 mit einem Antriebsmotor 20 gekoppelt ist. Das Verzweigungsgetriebe 18, die Kupplung 19 und der Antriebsmotor 20 bilden die Antriebseinheit 3. Der Antriebsmotor 20 ist mittels einer Steuereinheit 21 derart ansteuer- und betreibbar, dass die Wellen 7, 8 in der Drehrichtung 17 um die Drehachsen 15, 16 gleichsinnig drehangetrieben werden.

Zur Behandlung eines aufzubereitenden Kunststoffmaterials 22 sind mehrere Behandlungselemente 23 bis 28 in Richtung der jeweiligen Drehachse 15, 16 hintereinander und drehfest auf der jeweiligen Welle 7, 8 angeordnet. Die Behandlungselemente 23 bis 28 sind dicht kämmend ausgebildet und selbstreinigend. Die Behandlungselemente 23 bis 28 sind zudem als Schneckenelemente ausgebildet.

Der Extruder 2 weist eine Materialzuführung 29 in Form eines Zuführtrichters auf, die nahe der abtriebsseitigen Wellenenden 12, 13 an einer Oberseite des Gehäuses 4 angeordnet ist. Weiterhin weist der Extruder 2 eine Materialabführung 30 auf, die nahe der antriebsseitigen Wellenenden 9, 10 an einer Unterseite des Gehäuses 4 angeordnet ist. Die Materialabführung 30 ist beispielsweise als Fallrohr ausgebildet. Die Materialzuführung 29 und die Materialabführung 30 definieren eine Förderrichtung 31 des Kunststoffmaterials 22 in dem Gehäuse 4 bzw. den Gehäusebohrungen 5, 6. Die Förderrichtung 31 verläuft also prinzipiell von dem abtriebsseitigen Gehäuseende 14 zu dem antriebsseitigen Gehäuseende 11. Hierzu sind die Behandlungselemente 23, 24, 26, 27 im Wesentlichen zwischen dem abtriebsseitigen Gehäuseende 14 und der Materialabführung 30 auf den Wellen 7, 8 angeordnet und derart ausgebildet, dass die Förderrichtung 31 von den abtriebsseitigen Wellenenden 12, 13 zu den antriebsseitigen Wellenenden 9, 10 verläuft. Die Behandlungselemente 25, 28 sind zwischen dem antriebsseitigen Gehäuseende 11 und der Materialabführung 30 angeordnet und als Stauelemente ausgebildet, sodass diese eine Förderrichtung aufweisen, die der Förderrichtung 31 entgegengerichtet ist.

Ausgehend von dem abtriebsseitigen Gehäuseende 14 weist der Extruder 2 in Förderrichtung 31 nacheinander eine erste Entgasungszone 32, eine Einzugszone 33, eine erste Behandlungszone 34, eine zweite Entgasungszone 35, eine zweite Behandlungszone 36, eine Austragszone 37 und eine Stauzone 38 auf. Die erste Entgasungszone 32 ist als sogenannte Rückwärts-Entgasungszone ausgebildet und der Einzugszone 33 in der Förderrichtung 31 vorgeordnet. Im Bereich der ersten Entgasungszone 32 ist an der Oberseite des Gehäuses 4 eine erste Entgasungsöffnung 39 ausgebildet. Demgegenüber ist die zweite Entgasungszone 35 als Vorwärts-Entgasungszone ausgebildet und zwischen der ersten Behandlungszone 34 und der zweiten Behandlungszone 36 angeordnet. Im Bereich der zweiten Entgasungszone 35 ist eine zweite Entgasungsöffnung 40 an der Oberseite im Gehäuse 4 ausgebildet. Der zweiten Behandlungszone 36 ist in der Förderrichtung 31, die Austragszone 37 nachgeordnet, in der das aufbereitete Kunststoffmaterial 22 durch die Materialabführung 30 aus den Gehäusebohrungen 5, 6 ausgetragen wird. Die Stauzone 38 wird durch die Behandlungselemente 25 und 28 gebildet.

Zum Drehantreiben sind die Wellen 7, 8 mit ihren antriebsseitigen Wellenenden 9, 10 durch antriebsseitige Bohrungen 41, 42 in dem antriebsseitigen Gehäuseende 11 geführt. Zur Lagerung der antriebsseitigen Wellenenden 9, 10 sind in dem antriebsseitigen Gehäuseende 11 antriebsseitige Lager 43, 44 angeordnet, die als Radiallager und/oder Axiallager ausgebildet sein können. Zusätzlich sind zwischen den antriebsseitigen Lagern 43, 44 und den Gehäusebohrungen 5, 6 antriebsseitige Dichtungen 45, 46 angeordnet. Die Dichtungen 45, 46 sind in üblicher Weise als Stopfbuchspackungen oder Dicht- bzw. Simmerringe ausgebildet. Zusätzlich sind Axial- und/oder Radiallager in dem Verzweigungsgetriebe 18 vorgesehen.

Die abtriebsseitigen Wellenenden 12, 13 sind zu ihrer Lagerung durch abtriebsseitige Bohrungen 47, 48 in dem abtriebsseitigen Gehäuseende 14 geführt. Die abtriebsseitigen Wellenenden 12, 13 sind mittels abtriebsseitigen Radiallagern 49, 50 zur Aufnahme von radial zu den Drehachsen 15, 16 wirkenden Kräften und mittels abtriebsseitigen Axiallagern 51, 52 zur Aufnahme von in der Förderrichtung 31 wirkenden Zugkräften an dem abtriebsseitigen Gehäuseende 14 gelagert. Zwischen den Gehäusebohrungen 5, 6 und den Lagern 49 bis 52 sind abtriebsseitige Dichtungen 53, 54 in dem abtriebsseitigen Gehäuseende 14 angeordnet, die zur Abdichtung der abtriebsseitigen Wellenenden 12, 13 gegenüber dem abtriebsseitigen Gehäuseende 14 dienen. Die Dichtungen 53, 54 sind beispielsweise als Stopfbuchspackungen oder Dicht- bzw. Simmerringe ausgebildet.

Zur druckdichten Abdeckung der abtriebsseitigen Wellenenden 12, 13 ist an dem abtriebsseitigen Gehäuseende 14 ein Abdeckelement 55 befestigt. Das Abdeckelement 55 begrenzt zusammen mit dem Gehäuse 4 bzw. dem abtriebsseitigen Gehäuseende 14 eine Überwachungskammer 56, in die sich ein Überwachungssensor 57 erstreckt. Der Überwachungssensor 57 ist in Signalverbindung mit der Steuereinheit 21. Der Überwachungssensor 57 ist beispielsweise als Drucksensor ausgebildet. Das Abdeckelement 55 ist druckfest an dem abtriebsseitigen Gehäuseende 14 angeordnet, insbesondere bis zu einem Druck von mindestens 30 bar, insbesondere von mindestens 40 bar und insbesondere von mindestens 50 bar.

Zur Entlastung der abtriebsseitigen Dichtungen 53, 54 kann die Überwachungskammer 56 unter Druck gesetzt sein. Dies kann beispielsweise mittels einer Pumpe erfolgen. Vorzugsweise ist der Druck in der Überwachungskammer 56 derart, dass die Druckdifferenz zwischen dem Druck in der Überwachungskammer 56 und dem Druck in den Gehäusebohrungen 5, 6 im Bereich der abtriebsseitigen Wellenenden 12, 13 kleiner als 30 bar, insbesondere kleiner als 20 bar und insbesondere kleiner als 10 bar ist. Der Druck in der Überwachungskammer 56 kann beispielsweise mittels des Überwachungssensors 57 eingestellt werden.

Die Extruder-Anordnung 1 dient zur Durchführung eines reaktiven Extrusionsverfahrens. Das aufzubereitende Kunststoffmaterial 22 wird durch die Materialzuführung 29 in die Gehäusebohrungen 5, 6 zugeführt. Das Kunststoffmaterial 22 weist beim Zuführen in der Regel eine niedrige Viskosität auf. Das Kunststoffmaterial 22 wird unter Druck zugeführt, wobei der Druck mindestens 30 bar, insbesondere mindestens 40 bar und insbesondere mindestens 50 bar beträgt. Mittels der Antriebseinheit 3 werden die Wellen 7, 8 des Extruders 2 in der Drehrichtung 17 gleichsinnig drehangetrieben, sodass die als Schneckenelemente ausgebildeten Behandlungselemente 23, 24, 26, 27 das Kunststoffmaterial 22 in der Förderrichtung 31 durch die Einzugszone 33, die erste Behandlungszone 34, die zweite Entgasungszone 35, die zweite Behandlungszone 36 und die Austragszone 37 fördern. Flüchtige Bestandteile des Kunststoffmaterials 22, die während der Aufbereitung austreten, können durch die Entgasungsöffnungen 39, 40 der Entgasungszonen 32, 35 entweichen, wodurch sich der Druck in den Gehäusebohrungen 5, 6 erniedrigt. Das Kunststoffmaterial 22 wird insbesondere in den Zonen 34 bis 36 reaktiv mittels der Behandlungselemente 23, 24, 26, 27 behandelt. Nach der Aufbereitung wird das Kunststoffmaterial 22 durch die Materialabführung 30 aus den Gehäusebohrungen 5, 6 abgeführt.

Durch die als Stauelemente ausgebildeten Behandlungselemente 25, 28 wird verhindert, dass aufbereitetes Kunststoffmaterial 22, das nicht durch die Materialabführung 30 abgeführt wurde, zu dem antriebsseitigen Gehäuseende 11 gelangt. Die Stauelemente 25, 28 fördern das Kunststoffmaterial 22 in Richtung der Materialabführung 30 zurück, wo das zunächst nicht abgeführte Kunststoffmaterial 22 abgeführt wird. Die antriebsseitigen Dichtungen 45, 46 werden aufgrund der im Vergleich zu herkömmlichen Extrudern umgekehrten Förderrichtung 31 und aufgrund der Stauelemente 25, 28 entlastet, sodass die Abdichtung der antriebsseitigen Wellenenden 9, 10 gegenüber dem antriebsseitigen Gehäuseende 11 eine hohe Zuverlässigkeit aufweist.

Die abtriebsseitigen Dichtungen 53, 54 sind entsprechend dem Druck im Bereich der Einzugszone 33 ausgelegt, wobei die Behandlungselemente 23, 26 aufgrund ihrer Förderrichtung 31 die abtriebsseitigen Dichtungen 53, 54 entlasten. Die aufgrund des Drucks in der Einzugszone 33 auf die Wellen 7, 8 in der Förderrichtung 31 wirkenden Zugkräfte werden mittels der abtriebsseitigen Axiallager 51, 52, wirkungsvoll aufgenommen, sodass die antriebsseitigen Wellenenden 9, 10 im Wesentlichen frei von Zugkräften sind. Die Lager des Verzweigungsgetriebes 18 sind so entlastet.

Im Falle eines Versagens der abtriebsseitigen Dichtungen 53, 54 wird das aus den Gehäusebohrungen 5, 6 austretende Kunststoffmaterial 22 in der Überwachungskammer 56 aufgenommen und durch das Abdeckelement 55 an einem weiteren Austreten gehindert. Der Überwachungssensor 57 detektiert einen Druckanstieg, der durch das in der Überwachungskammer 56 befindliche Kunststoffmaterial 22 erzeugt wird. Das entsprechende Überwachungssignal wird an die Steuereinheit 21 weitergeleitet, die beispielsweise ein Alarmsignal auslöst oder die Extruder-Anordnung 1 in kontrollierter Weise abschaltet.

## Patentansprüche

1. Mehrwellen-Extruder zur Durchführung eines Extrusionsverfahrens mit
- einem Gehäuse (4),
- mindestens zwei Gehäusebohrungen (5, 6), die in dem Gehäuse (4) zueinander parallel und einander durchdringend ausgebildet sind,
- mindestens zwei um zugehörige Drehachsen (15, 16) drehantreibbaren Wellen (7, 8), die konzentrisch in den Gehäusebohrungen (5, 6) angeordnet sind und jeweils ein antriebsseitiges Wellenende (9, 10) und ein abtriebsseitiges Wellenende (12, 13) aufweisen,
- mehreren Behandlungselementen (23, 24, 26, 27) zur Behandlung eines aufzubereitenden Kunststoffmaterials (22), die in Richtung der jeweiligen Drehachse (15, 16) hintereinander auf den mindestens zwei Wellen (7, 8) drehfest angeordnet und miteinander dicht kämmend ausgebildet sind,
- einer Materialzuführung (29) und einer Materialabführung (30), die eine Förderrichtung (31) des Kunststoffmaterials (22) in dem Gehäuse (4) definieren, wobei die Behandlungselemente (23, 24, 26, 27) derart ausgebildet sind, dass die Förderrichtung (31) des Kunststoffmaterials (22) von den abtriebsseitigen Wellenenden (12, 13) zu den antriebsseitigen Wellenenden (9, 10) verläuft,
wobei zwischen einem abtriebsseitigen Gehäuseende (14) und der Materialzuführung (29) auf den Wellen (7, 8) jeweils mindestens ein Behandlungselement (23, 26) angeordnet ist, das derart ausgebildet ist, dass das Kunststoffmaterial (22) in der Förderrichtung (31) förderbar ist, und
wobei zwischen dem abtriebsseitigen Gehäuseende (14) und der Materialabführung (30) mindestens eine Entgasungszone (32, 35) mit einer zugehörigen Entgasungsöffnung (39, 40) ausgebildet ist,
**dadurch gekennzeichnet,**
**dass** die abtriebsseitigen Wellenenden (12, 13) mittels abtriebsseitiger Lager (49 bis 52) in dem abtriebsseitigen Gehäuseende (14) gelagert und mittels abtriebsseitiger Dichtungen (53, 54) abgedichtet sind.

2. Mehrwellen-Extruder nach Anspruch 1, **dadurch gekennzeichnet, dass** die Materialzuführung (29) im Bereich der abtriebsseitigen Wellenenden (12, 13) an einer Oberseite des Gehäuses (4) ausgebildet ist.

3. Mehrwellen-Extruder nach Anspruch 1 oder 2, **dadurch gekennzeichnet,**
**dass** die Materialabführung (30) im Bereich der antriebsseitigen Wellenenden (9, 10) an einer Unterseite des Gehäuses (4) ausgebildet ist.

4. Mehrwellen-Extruder nach einem der Ansprüche 1 bis 3, **dadurch gekennzeichnet,**
**dass** zwischen einem antriebsseitigen Gehäuseende (11) und der Materialabführung (30) auf den Wellen (7, 8) jeweils mindestens ein Behandlungselement (25, 28) angeordnet ist, das als Stauelement ausgebildet ist und mittels dem das Kunststoffmaterial (22) entgegen der Förderrichtung (31) förderbar ist.

5. Mehrwellen-Extruder nach einem der Ansprüche 1 bis 4, **dadurch gekennzeichnet,**
**dass** die antriebsseitigen Wellenenden (9, 10) mittels antriebsseitiger Lager (43, 44) in einem antriebsseitigen Gehäuseende (11) gelagert und mittels antriebsseitiger Dichtungen (45, 46) abgedichtet sind.

6. Mehrwellen-Extruder nach einem der Ansprüche 1 bis 5, **dadurch gekennzeichnet,**
**dass** jedes abtriebsseitige Wellenende (12, 13) mittels eines Axiallagers (51, 52) zur Aufnahme von in der Förderrichtung (31) wirkenden Zugkräften und mittels eines Radiallagers (49, 50) zur Aufnahme von radial zu der jeweiligen Drehachse (15, 16) wirkenden Kräften in dem abtriebsseitigen Gehäuseende (14) gelagert ist.

7. Mehrwellen-Extruder nach Anspruch 6, **dadurch gekennzeichnet, dass** die abtriebsseitigen Dichtungen (53, 54) den Axiallagern (51, 52) in einer entgegengesetzt zu der Förderrichtung (31) verlaufenden Richtung vorgeordnet sind.

8. Mehrwellen-Extruder nach einem der Ansprüche 1 bis 7, **dadurch gekennzeichnet,**
**dass** an dem abtriebsseitigen Gehäuseende (14) ein Abdeckelement (55) zur druckdichten Abdeckung der abtriebsseitigen Wellenenden (12, 13) angeordnet ist.

9. Mehrwellen-Extruder nach Anspruch 8, **dadurch gekennzeichnet, dass** das Abdeckelement (55) mit dem Gehäuse (4) eine Überwachungskammer (56) zur Aufnahme von Kunststoffmaterial (22) ausbildet, das mittels eines Überwachungssensors (57) detektierbar ist.

10. Mehrwellen-Extruder nach einem der Ansprüche 1 bis 9, **dadurch gekennzeichnet,**
**dass** dieser als gleichsinnig drehender und dicht kämmender Doppelwellen-Extruder ausgebildet ist.

11. Extruder-Anordnung mit
- einem Mehrwellen-Extruder (2) gemäß einem der Ansprüche 1 bis 10, und
- einer Antriebseinheit (3) zum Drehantreiben der Wellen (7,8), die
-- mit den antriebsseitigen Wellenenden (9, 10) gekoppelt ist und
-- derart betreibbar ist, dass die Förderrichtung (31) des Kunststoffmaterials (22) von den abtriebsseitigen Wellenenden (12, 13) zu den antriebsseitigen Wellenenden (9, 10) verläuft.

12. Reaktives Extrusionsverfahren umfassend folgende Schritte:
- Bereitstellen eines Mehrwellen-Extruders (2) mit
-- einem Gehäuse (4),
-- mindestens zwei Gehäusebohrungen (5, 6), die in dem Gehäuse (4) zueinander parallel und einander durchdringend ausgebildet sind,
-- mindestens zwei um zugehörige Drehachsen (15, 16) drehantreibbaren Wellen (7, 8), die konzentrisch in den Gehäusebohrungen (5, 6) angeordnet sind und jeweils ein antriebseitiges Wellenende (9, 10) und ein abtriebsseitiges Wellenende (12, 13) aufweisen,
-- mehreren Behandlungselementen (23, 24, 26, 27) zur Behandlung eines aufzubereitenden Kunststoffmaterials (22), die in Richtung der jeweiligen Drehachse (15, 16) hintereinander auf den mindestens zwei Wellen (7, 8) drehfest angeordnet und miteinander dicht kämmend ausgebildet sind,
-- einer Materialzuführung (29) und einer Materialabführung (30), die eine Förderrichtung (31) des Kunststoffmaterials (22) in dem Gehäuse (4) definieren, wobei die Behandlungselemente (23, 24, 26, 27) derart ausgebildet sind, dass die Förderrichtung (31) des Kunststoffmaterials (22) von den abtriebsseitigen Wellenenden (12, 13) zu den antriebsseitigen Wellenenden (9, 10) verläuft,
wobei zwischen einem abtriebsseitigen Gehäuseende (14) und der Materialzuführung (29) auf den Wellen (7, 8) jeweils mindestens ein Behandlungselement (23, 26) angeordnet ist, das derart ausgebildet ist, dass das Kunststoffmaterial (22) in der Förderrichtung (31) förderbar ist,
wobei zwischen dem abtriebsseitigen Gehäuseende (14) und der Materialabführung (30) mindestens eine Entgasungszone (32, 35) mit einer zugehörigen Entgasungsöffnung (39, 40) ausgebildet ist, und
wobei die abtriebsseitigen Wellenenden (12, 13) mittels abtriebsseitiger Lager (49 bis 52) in dem abtriebsseitigen Gehäuseende (14) gelagert und mittels abtriebsseitiger Dichtungen (53, 54) abgedichtet sind,
- Zuführen von aufzubereitendem Kunststoffmaterial (22) durch die Materialzuführung (29) in den Mehrwellen-Extruder (2),
- Fördern des Kunststoffmaterials (22) in der Förderrichtung (31) von der Materialzuführung (29) zu der Materialabführung (30) und Behandeln des Kunststoffmaterials (22) mittels der Behandlungselemente (23, 24, 26, 27),
- Entgasen des Kunststoffmaterials (22) in der mindestens einen Entgasungszone (32, 35), und
- Abführen des behandelten Kunststoffmaterials (22) durch die Materialabführung (30).

## Claims

1. Multiple-shaft extruder for performing an extrusion method, comprising
- a housing (4),
- at least two housing bores (5, 6), which are formed in the housing (4) such as to be parallel to each other and to penetrate one another,
- at least two shafts (7, 8), which are rotatably drivable about associated rotational axes (15, 16), the shafts (7, 8) being arranged concentrically in the housing bores (5, 6) and each having an input-end shaft end (9, 10) and an output-end shaft end (12, 13),
- a plurality of treatment elements (23, 24, 26, 27) for the treatment of a plastic material (22) to be processed, the treatment elements (23, 24, 26, 27) being non-rotationally arranged one behind the other on the at least two shafts (7, 8) in the direction of the respective rotational axis (15, 16) and being formed in a closely intermeshing manner,
- a material inlet (29) and a material discharge (30), which define a conveying direction (31) of the plastic material (22) in the housing (4), the treatment elements (23, 24, 26, 27) being configured such that the conveying direction (31) of the plastic material (22) runs from the output-end shaft ends (12, 13) to the input-end shaft ends (9, 10),
wherein at least one treatment element (23, 26) is arranged on each of the shafts (7, 8) between an output-end housing end (14) and the material inlet (29), the treatment element (23, 26) being configured such that the plastic material (22) is conveyable in the conveying direction (31), and
wherein at least one degassing zone (32, 35) with an associated degassing opening (39, 40) is formed between the output-end housing end (14) and the material discharge (30),
**characterized in**
**that** the output-end shaft ends (12, 13) are mounted in the output-end housing end (14) by means of output-end bearings (49 to 52) and are sealed by means of output-end seals (53, 54).

2. Multiple-shaft extruder according to claim 1, **characterized in that** the material inlet (29) is formed on an upper side of the housing (4) in the area of the output-end shaft ends (12, 13).

3. Multiple-shaft extruder according to claim 1 or 2, **characterized in that** the material discharge (30) is formed on a lower side of the housing (4) in the area of the input-end shaft ends (9, 10).

4. Multiple-shaft extruder according to any one of claims 1 to 3, **characterized in**
**that** at least one treatment element (25, 28) is arranged on each of the shafts (7, 8) between an input-end housing end (11) and the material discharge (30), the treatment element (25, 28) being configured as an accumulation element by means of which the plastic material (22) is conveyable counter to the conveying direction (31).

5. Multiple-shaft extruder according to any one of claims 1 to 4, **characterized in**
**that** the input-end shaft ends (9, 10) are mounted in an input-end housing end (11) by means of input-end bearings (43, 44) and are sealed by means of input-end seals (45, 46).

6. Multiple-shaft extruder according to any one of claims 1 to 5, **characterized in**
**that** each output-end shaft end (12, 13) is mounted in the output-end housing end by means of an axial bearing (51, 52) configured to absorb tensile forces acting in the conveying direction (31) and by means of a radial bearing (49, 50) configured to absorb forces acting radially to the respective rotational axis (15, 16).

7. Multiple-shaft extruder according to claim 6, **characterized in**
**that** the output-end seals (53, 54) are arranged in front of the axial bearings (51, 52) in a direction running counter to the conveying direction (31).

8. Multiple-shaft extruder according to any one of claims 1 to 7, **characterized in**
**that** a cover element (55) is arranged on the output-end housing end (14) to cover the output-end shaft ends (12, 13) in a pressure-tight manner.

9. Multiple-shaft extruder according to claim 8, **characterized in**
**that** the cover element (55) and the housing (4) together form a monitoring chamber (56) configured to receive plastic material (22), which is detectable by means of a monitoring sensor (57).

10. Multiple-shaft extruder according to any one of claims 1 to 9, **characterized in**
**that** said multiple-shaft extruder is configured as a closely intermeshing twin-shaft extruder rotating in the same direction.

11. Extruder assembly comprising
- a multiple-shaft extruder (2) according to any one of claims 1 to 10, and
- a drive unit (3) for rotatably driving the shafts (7, 8), the drive unit (3)
-- being coupled with the input-end shaft ends (9, 10), and
-- being operable such that the conveying direction (31) of the plastic material (22) runs from the output-end shaft ends (12, 13) to the input-end shaft ends (9, 10).

12. Reactive extrusion method comprising the following steps:
- providing a multiple-shaft extruder (2) comprising
-- a housing (4),
-- at least two housing bores (5, 6), which are formed in the housing (4) such as to be parallel to each other and to penetrate one another,
-- at least two shafts (7, 8), which are rotatably drivable about associated rotational axes (15, 16), the shafts (7, 8) being arranged concentrically in the housing bores (5, 6) and each having an input-end shaft end (9, 10) and an output-end shaft end (12, 13),
-- a plurality of treatment elements (23, 24, 26, 27) for the treatment of a plastic material (22) to be processed, the treatment elements (23, 24, 26, 27) being non-rotationally arranged one behind the other on the at least two shafts (7, 8) in the direction of the respective rotational axis (15, 16) and being formed in a closely intermeshing manner,
-- a material inlet (29) and a material discharge (30), which define a conveying direction (31) of the plastic material (22) in the housing (4), the treatment elements (23, 24, 26, 27) being configured such that the conveying direction (31) of the plastic material (22) runs from the output-end shaft ends (12, 13) to the input-end shaft ends (9, 10),
wherein at least one treatment element (23, 26) is arranged on each of the shafts (7, 8) between an output-end housing end (14) and the material inlet (29), the treatment element (23, 26) being configured such that the plastic material (22) is conveyable in the conveying direction (31),
wherein at least one degassing zone (32, 35) with an associated degassing opening (39, 40) is formed between the output-end housing end (14) and the material discharge (30), and
wherein the output-end shaft ends (12, 13) are mounted in the output-end housing end (14) by means of output-end bearings (49 to 52) and are sealed by means of output-end seals (53, 54),
- feeding plastic material (22) to be processed through the material inlet (29) into the multiple-shaft extruder (2),
- conveying the plastic material (22) in the conveying direction (31) from the material inlet (29) to the material discharge (30) and treating the plastic material (22) by means of the treatment elements (23, 24, 26, 27),
- degassing the plastic material (22) in the at least one degassing zone (32, 35), and
- discharging the treated plastic material (22) via the material discharge (30).

## Revendications

1. Extrudeuse à arbres multiples pour exécuter un procédé d'extrusion, comprenant
- un boîtier (4),
- au moins deux alésages de boîtier (5, 6) pratiqués dans le boîtier (4) parallèlement l'un à l'autre et pénétrant l'un dans l'autre,
- au moins deux arbres rotatifs (7, 8) qui peuvent être entraînés en rotation autour d'axes rotatifs associés (15, 16), qui sont disposés de manière concentrique dans les alésages du boîtier (5, 6) et présentent chacun une extrémité d'arbre côté entraînement (9, 10) et une extrémité d'arbre côté entraîné (12, 13),
- une pluralité d'éléments de traitement (23, 24, 26, 27) pour traiter une matière plastique à traiter (22) qui sont disposés, de manière solidaire en rotation, sur les au moins deux arbres (7, 8) les uns derrière les autres dans le sens de l'axe de rotation respectif (15, 16) et sont conçus de manière à s'engrener étroitement les uns avec les autres,
- une alimentation en matière (29) et une sortie de matière (30) qui définissent un sens d'acheminement (31) de la matière plastique (22) dans le boîtier (4), les éléments de traitement (23, 24, 26, 27) étant conçus de sorte que le sens d'acheminement (31) de la matière plastique (22) va des extrémités d'arbre côté entraîné (12, 13) aux extrémités d'arbre côté entraînement (9, 10),
- au moins un élément de traitement (23, 26) étant disposé sur les arbres (7, 8) entre une extrémité de boîtier côté entraîné (14) et l'alimentation en matière (29), lequel est conçu de telle sorte que la matière plastique (22) puisse être acheminée dans le sens d'acheminement (31), et
- au moins une zone de dégazage (32, 35) comportant une ouverture de dégazage (39, 40) correspondante étant formée entre l'extrémité du boîtier côté entraîné (14) et la sortie de matière (30),
**caractérisée en ce que,** les extrémités d'arbre côté entraîné (12, 13) sont montées à l'extrémité du boîtier côté entraîné (14) au moyen de paliers côté entraîné (49 à 52) et sont étanchéifiées au moyen de joints d'étanchéité côté entraîné (53, 54).

2. Extrudeuse à arbres multiples selon la revendication 1, **caractérisée en ce que** l'alimentation en matière (29) est réalisée dans la zone des extrémités d'arbre côté entraîné (12, 13) sur un côté supérieur du boîtier (4).

3. Extrudeuse à arbres multiples selon la revendication 1 ou 2, **caractérisée en ce que** la sortie de matière (30) est réalisée dans la zone des extrémités d'arbre côté entraînement (9, 10) sur un côté inférieur du boîtier (4).

4. Extrudeuse à arbres multiples selon l'une des revendications 1 à 3, **caractérisée en ce que** au moins un élément de traitement (25, 28) est disposé sur chacun des arbres (7, 8) entre une extrémité de boîtier côté entraînement (11) et la sortie de matière (30), lequel est conçu comme un élément de refoulement, et au moyen duquel la matière plastique (22) peut être acheminée dans le sens contraire du sens d'acheminement (31).

5. Extrudeuse à arbres multiples selon l'une des revendications 1 à 4, **caractérisée en ce que** les extrémités d'arbre côté entraînement (9, 10) sont montées à une extrémité de boîtier côté entraînement (11) au moyen de paliers côté entraînement (43, 44) et sont étanchéifiées au moyen de joints d'étanchéité côté entraînement (45, 46).

6. Extrudeuse à arbres multiples selon l'une des revendications 1 à 5, **caractérisée en ce que** chaque extrémité d'arbre côté entraîné (12, 13) est montée à l'extrémité du boîtier côté entraîné (14). au moyen d'un palier axial (51, 52) pour recevoir les forces de traction s'exerçant dans le sens d'acheminement (31) et au moyen d'un palier radial (49, 50) pour recevoir les forces s'exerçant radialement par rapport à chaque axe de de rotation (15, 16).

7. Extrudeuse à arbres multiples selon la revendication 6, **caractérisée en ce que** les joints d'étanchéité côté entraîné (53, 54) sont disposés en amont des paliers axiaux (51, 52) dans un sens contraire au sens d'acheminement (31).

8. Extrudeuse à arbres multiples selon l'une des revendications 1 à 7, **caractérisée en ce qu'un** élément de recouvrement (55) pour le recouvrement étanche sous pression des extrémités d'arbre côté entraîné (12, 13) est disposé à l'extrémité du boîtier côté entraîné (14).

9. Extrudeuse à arbres multiples selon la revendication 8, **caractérisée en ce que** l'élément de recouvrement (55) forme avec le boîtier (4) une chambre de surveillance (56) pour recevoir une matière plastique (22) détectable au moyen d'un capteur de surveillance (57).

10. Extrudeuse à arbres multiples selon l'une des revendications 1 à 9, **caractérisée en ce qu'**elle est conçue comme une extrudeuse à double arbre tournant dans le même sens et s'engrenant étroitement.

11. Installation d'extrusion, comprenant
- une extrudeuse à arbres multiples (2) selon l'une des revendications 1 à 10, et
- une unité d'entraînement (3) pour l'entraînement en rotation des arbres (7,8), qui
-- est couplée aux extrémités d'arbres côté entraînement (9, 10) et
-- fonctionne de telle sorte que le sens d'acheminement (31) de la matière plastique (22) va des extrémités d'arbre côté entraîné (12, 13) aux extrémités d'arbre côté entraînement (9, 10).

12. Procédé d'extrusion réactive comprenant les étapes suivantes :
- réaliser une extrudeuse à arbres multiples (2), comprenant
-- un boîtier (4),
-- au moins deux alésages de boîtier (5, 6) qui sont pratiqués dans le boîtier (4) parallèlement l'un à l'autre et qui pénètrent l'un dans l'autre,
-- au moins deux arbres (7, 8) pouvant être entraînés en rotation autour d'axes de rotation associés (15, 16), qui sont disposés de manière concentrique dans les alésages du boîtier (5, 6) et présentent chacun une extrémité d'arbre côté entraînement (9, 10) et une extrémité d'arbre côté entraîné (12, 13),
-- une pluralité d'éléments de traitement (23, 24, 26, 27) pour traiter une matière plastique (22) à traiter, qui sont disposés, de manière solidaire en rotation, sur les au moins deux arbres (7, 8) les uns derrière les autres dans le sens de l'axe de rotation respectif (15, 16) et sont conçus de manière à s'engrener étroitement les uns avec les autres,
-- une alimentation en matière (29) et une sortie de matière (30) qui définissent un sens d'acheminement (31) de la matière plastique (22) dans le boîtier (4), les éléments de traitement (23, 24, 26, 27) étant conçus de sorte que le sens d'acheminement (31) de la matière plastique (22) va des extrémités d'arbre côté entraîné (12, 13) aux extrémités d'arbre côté entraînement (9, 10)
au moins un élément de traitement (23, 26) étant disposé sur les arbres (7, 8) entre une extrémité de boîtier côté entraîné (14) et l'alimentation en matière (29), lequel est conçu de telle sorte que la matière plastique (22) puisse être acheminée dans le sens d'acheminement (31), et
au moins une zone de dégazage (32, 35) comportant une ouverture de dégazage (39, 40) correspondante étant formée entre l'extrémité du boîtier côté entraîné (14) et la sortie de matière (30), et
les extrémités d'arbre côté entraîné (12, 13) étant montées à l'extrémité du boîtier côté entraîné (14) au moyen de paliers côté entraîné (49 à 52) et étant étanchéifiées au moyen de joints d'étanchéité côté entraîné (53, 54),
- faire entrer de la matière plastique à traiter (22) dans l'extrudeuse à arbres multiples (2) par l'alimentation en matière (29),
- acheminer la matière plastique (22) dans le sens d'acheminement (31) de l'alimentation en matière (29) vers la sortie de matière (30) et traiter la matière plastique (22) au moyen des éléments de traitement (23, 24, 26, 27),
- dégazer la matière plastique (22) dans l'au moins une zone de dégazage (32, 35), et
- faire sortir la matière plastique traitée (22) par la sortie de matière (30).
